# EUROPEAN PATENT APPLICATION

(11) **EP 3 528 222 A1**
(43) Date of publication of application: **21.08.2019**
(21) Application number: 19154990.6
(22) Date of filing: 01.02.2019
(51) Int. Cl.: G07G 1/00, G07F 7/08

(54) **COMMODITY-DATA PROCESSING APPARATUS**

(30) Priority: 01.02.2018 JP 2018016633
(71) Applicant: Toshiba Tec Kabushiki Kaisha, 141-8562 Tokyo (JP)
(72) Inventor: SUSAKI, Akiko, Shinagawa-ku, Tokyo 141-8562 (JP); GOTANDA, Tsuyoshi, Shinagawa-ku, Tokyo 141-8562 (JP); GOTOU, Chikashi, Shinagawa-ku, Tokyo 141-8562 (JP); WATANABE, Osamu, Shinagawa-ku, Tokyo 141-8562 (JP); KAWAGUCHI, Yuki, Shinagawa-ku, Tokyo 141-8562 (JP)
(74) Representative: Fédit-Loriot

(57) **Abstract**

A commodity-data processing apparatus a receipt printer, a scanner, and a cover. The receipt printer includes a printer housing having a first rear opening. The scanner includes a scanner housing having a second rear opening. The scanner housing is disposed adjacent to the printer housing and detachably fixed to the printer housing. The cover covers the first rear opening of the receipt printer and the second rear opening of the scanner.

## Description

### FIELD

The present invention relates to the field of a check-out technology in general, and embodiments described herein relate in particular to a commodity-data processing apparatus such as a self-service point-of-sale terminal (hereinafter self-POS).

### BACKGROUND

A self-POS, which is a type of a POS with which a customer primarily operates for a check-out operation, includes, in a housing, a plurality of devices such as a scanner that reads a barcode of a commodity, a card reader that reads a credit card and a point card, and a printer that issues a receipt. Partly because of a labor shortage and/or to reduce labor costs, terminals operated by customers such as the self-POS and a semiself-POS are being spread.

There is a self-POS including devices such as a scanner, a card reader, and a printer that are vertically disposed side by side in order to reduce a footprint of the self-POS. An operation manner of such a self-POS may be different among users. For example, some users hardly use a card reader of the self-POS. In this case, the self-POS including the card reader may be over-engineered, and therefore, may lead to unnecessary expenses. For that reason, it is desirable to provide a self-POS that can be formed in a customized device layout.

### SUMMARY OF INVENTION

To solve such problem, there is provided a commodity-data processing apparatus comprising:
a receipt printer including a printer housing having a first rear opening;
a scanner including a scanner housing having a second rear opening, the scanner housing being disposed adjacent to the printer housing and detachably fixed to the printer housing; and
a cover covering the first rear opening of the receipt printer and the second rear opening of the scanner.

Preferably, the printer housing includes a receipt discharge opening on a front side opposite to a rear side on which the first rear opening is formed, and the scanner includes a scanning window on a front side opposite to a rear side on which the second rear opening is formed.

Preferably still, a top surface of the printer housing faces a bottom surface of the scanner.

Preferably yet, a width of the first rear opening of the printer housing between side surfaces of the printer housing is equal to a width of the second rear opening of the scanner housing between side surfaces of the scanner housing.

Suitably, side surfaces of the printer housing are flush with side surfaces of the scanner housing on both sides.

Suitably still, a front surface of the printer housing is flush with a front surface of the scanner housing.

Suitably yet, the commodity-data processing apparatus further comprises a card reader including a card reader housing that is not covered by the cover.

The invention also relates to a commodity-data processing apparatus comprising:
a receipt printer including a printer housing having a first rear opening;
a card reader including a card reader housing having a second rear opening, the card reader housing being disposed adjacent to the printer housing and detachably fixed to the printer housing; and
a cover covering the first rear opening of the receipt printer and the second rear opening of the card reader.

Preferably, the printer housing includes a receipt discharge opening on a front side opposite to a rear side on which the first rear opening is formed, and the card reader includes a card insertion opening on a front side opposite to a rear side on which the second rear opening is formed.

Preferably still, a top surface of the printer housing faces a bottom surface of the card reader.

Preferably yet, a width of the first rear opening of the printer housing between side surfaces of the printer housing is equal to a width of the second rear opening of the card reader housing between side surfaces of the card reader housing.

Suitably, side surfaces of the printer housing are flush with side surfaces of the card reader housing on both sides.

Suitably still, a front surface of the printer housing is flush with a front surface of the card reader housing.

Suitably yet, the commodity-data processing apparatus further comprises a scanner including a scanner housing provided separately from the printer housing and the card reader housing.

The invention also concerns a commodity-data processing apparatus comprising:
a receipt printer including a printer housing having a first rear opening;
a scanner including a scanner housing having a second rear opening;
a card reader including a card reader housing having a third rear opening, at least two of the printer housing, the scanner housing, and the card reader housing being detachably fixed to each other;
a display;
a controller configured to control the receipt printer, the scanner, the card reader, and the display; and
a cover covering at least two of the first, second, and third rear openings corresponding to said at least two of the printer housing, the scanner housing, and the card reader housing.

Preferably, the printer housing includes a receipt discharge opening on a front side opposite to a rear side on which the first rear opening is formed,
the scanner includes a scanning window on a front side opposite to a rear side on which the second rear opening is formed, and
the card reader includes a card insertion opening on a front side opposite to a rear side on which the third rear opening is formed.

Preferably still, a width of the first rear opening of the printer housing between side surfaces of the printer housing, a width of the second rear opening of the scanner housing between side surfaces of the scanner housing, and a width of the third rear opening of the card reader housing between side surfaces of the card reader housing are equal to each other.

Preferably yet, a front surface of the printer housing, a front surface of the scanner housing, and a front surface of the card reader housing are flush with each other.

Suitably, the display is disposed on a top surface of one of said at least two of the printer housing, the scanner housing, and the card reader housing that is disposed uppermost.

Suitably still, the commodity-data processing apparatus further comprises a second display attached to the cover and facing opposite to the display.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 illustrates a perspective front view of a self-POS according to a first embodiment.
FIG. 2 illustrates a perspective rear view of the self-POS illustrated in FIG. 1.
FIG. 3 illustrates a perspective view of a printer included in the self-POS illustrated in FIG. 1.
FIG. 4 illustrates a front-side perspective view of an assembly obtained by combining the printer and a scanner of the self-POS illustrated in FIG. 1.
FIG. 5 illustrates a back-side perspective view of the assembly illustrated in FIG. 4.
FIG. 6 illustrates a perspective view of the scanner included in the self-POS illustrated in FIG. 1.
FIG. 7 illustrates a perspective view of a supporting leg that fixes a display to the scanner included in the self-POS illustrated in FIG. 1.
FIG. 8 illustrates a perspective view of a back cover of the self-POS illustrated in FIG. 1.
FIG. 9 illustrates a cross-sectional view of a fixing structure on the upper end side of the back cover illustrated in FIG. 8.
FIG. 10 illustrates a cross-sectional view of a fixing structure on the lower end side of the back cover illustrated in FIG. 8.
FIG. 11 illustrates an exterior perspective view of a self-POS according to a second embodiment.
FIG. 12 illustrates a rear exterior perspective view of the self-POS illustrated in FIG. 11.
FIG. 13 illustrates a perspective view of a card reader incorporated in the self-POS illustrated in FIG. 11.
FIG. 14 illustrates a front-side perspective view of an assembly obtained by combining a printer and a card reader of the self-POS illustrated in FIG. 11.
FIG. 15 illustrates a back-side perspective view of the assembly illustrated in FIG. 14.
FIG. 16 illustrates an exterior perspective view of a self-POS according to a modification of the embodiments.
FIG. 17 illustrates a rear perspective view of the self-POS illustrated in FIG. 16.

### DETAILED DESCRIPTION

A commodity-data processing apparatus a receipt printer, a scanner, and a cover. The receipt printer includes a printer housing having a first rear opening. The scanner includes a scanner housing having a second rear opening. The scanner housing is disposed adjacent to the printer housing and detachably fixed to the printer housing. The cover covers the first rear opening of the receipt printer and the second rear opening of the scanner.
A commodity-data processing apparatus according to another embodiment includes a receipt printer, a card reader, and a cover. The receipt printer includes a printer housing having a first rear opening. The card reader includes a card reader housing having a second rear opening. The card reader housing is disposed adjacent to the printer housing and detachably fixed to the printer housing. The cover covers the first rear opening of the receipt printer and the second rear opening of the card reader.

A commodity-data processing apparatus according to another embodiment includes a receipt printer, a scanner, a card reader, a display, a controller, and a cover. The receipt printer includes a printer housing having a first rear opening. The scanner includes a scanner housing having a second rear opening. The card reader includes a card reader housing having a third rear opening. At least two of the printer housing, the scanner housing, and the card reader housing are detachably fixed to each other. The controller is configured to control the receipt printer, the scanner, the card reader, and the display. The cover covers at least two of the first, second, and third rear openings corresponding to said at least two of the printer housing, the scanner housing, and the card reader housing.

Embodiments are explained in detail below with reference to the drawings. In the following explanation, on coordinate axes described in the figures, a plus side along X direction is referred to as a right side, a minus side along X direction is referred to as a left side, a plus side along Y axis is referred to an upper side, a minus side along Y axis is referred to as a lower side, a plus side along Z axis is referred to as a back side, and a minus side along Z axis is referred to as a front side.

### First Embodiment

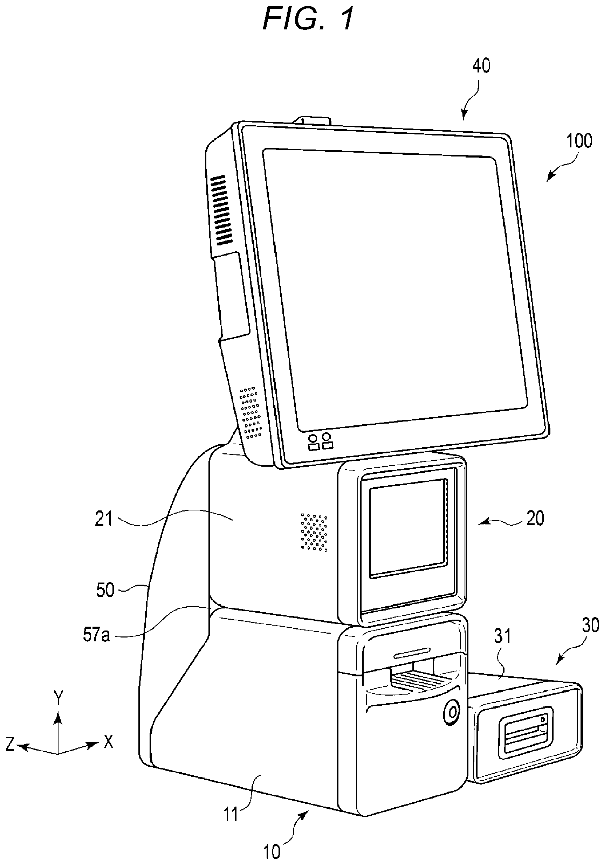

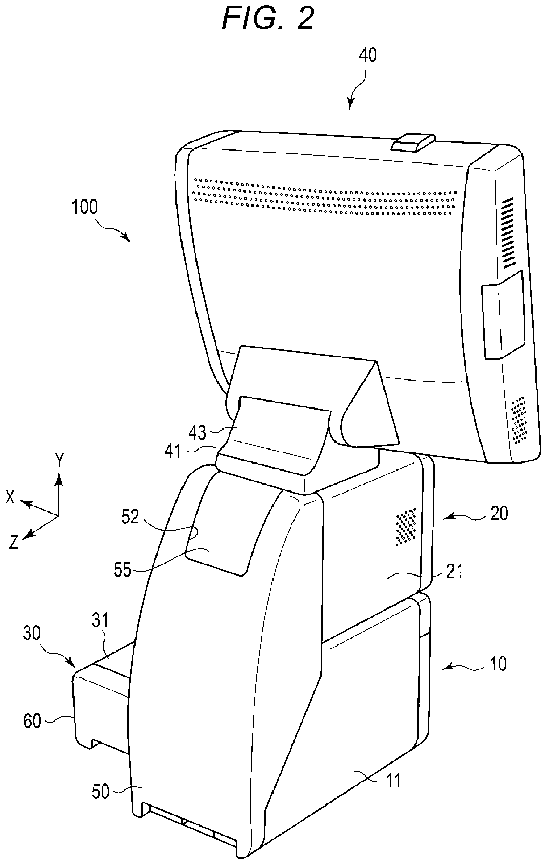

As illustrated in FIGS. 1 and 2, a self-POS 100 (a commodity-data processing apparatus) according to a first embodiment includes a printer 10 including a housing 11 (a first housing), a scanner 20 including a housing 21 (a second housing), a card reader 30 including a housing 31 (a third housing), and a display 40 including a controller. The printer 10, the scanner 20, and the card reader 30 are independent units separable from one another. The widths in the left-right direction of the housings 11, 21, and 31 are substantially the same. The housings 11, 21, and 31 can be freely combined and used.

In the present embodiment, the housing 21 of the scanner 20 is disposed on the housing 11 of the printer 10. The housing 31 of the card reader 30 is disposed beside the housing 11 of the printer 10. The display 40 is disposed on the housing 21 of the scanner 20. A back cover 50 that collectively covers the printer 10 and the scanner 20 is provided on the back side of the printer 10 and the back side of the scanner 20. A back cover 60 different from the back cover 50 is provided on the back side of the card reader 30.

The printer 10 issues a receipt for a person who purchases a commodity. The scanner 20 reads a barcode of the commodity. The card reader 30 reads a credit card or a point card presented by the person who purchases the commodity. The display 40 displays various kinds of information to a store clerk. A screen of the display 40 may be a touch panel incorporating a touch sensor.

A wire (not illustrated in FIGS. 1 and 2) of the printer 10, a wire (not illustrated in FIGS. 1 and 2) of the scanner 20, and a wire (not illustrated in FIGS. 1 and 2) of the cartridge 30 are connected to non-illustrated connectors on the back side of the display 40. A plurality of wires drawn out from the units and connected to the display 40 (the controller) are wired passing through the inner side of the back cover 50 and passing through a leg cover 43 of a supporting leg 41 (described below) of the display 40. Therefore, not all the wires are exposed to the outside.

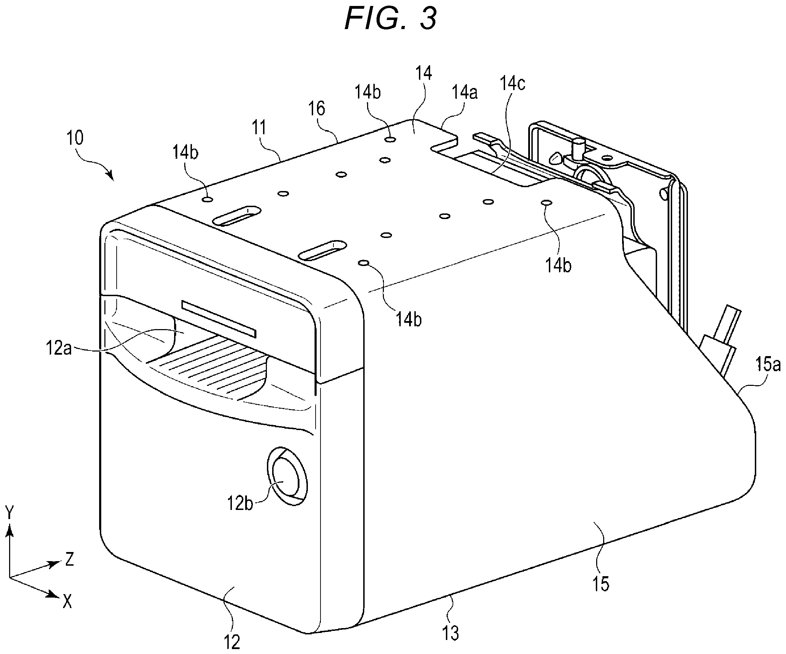

As illustrated in FIG. 3, the printer 10 includes the housing 11 having a substantially rectangular box shape. The housing 11 includes a front wall 12, a bottom wall 13, a top wall 14, and left and right sidewalls 15 and 16. The housing 11 does not have a wall and is open on the back side. The housing 11 forms an outer shell of the printer 10. The bottom wall 13 of the housing 11 serves as a frame for supporting and fixing components housed in the housing 11.

An issue port 12a for issuing a receipt and a power button 12b are provided on the front wall 12 of the housing 11. The top wall 14 is formed with a depth smaller than the depth of the bottom wall 13. Rear end sides 15a and 16a of the sidewalls 15 and 16 are inclined to the back side from a rear end side 14a of the top wall 14 toward a rear end side 13a of the bottom wall 13.

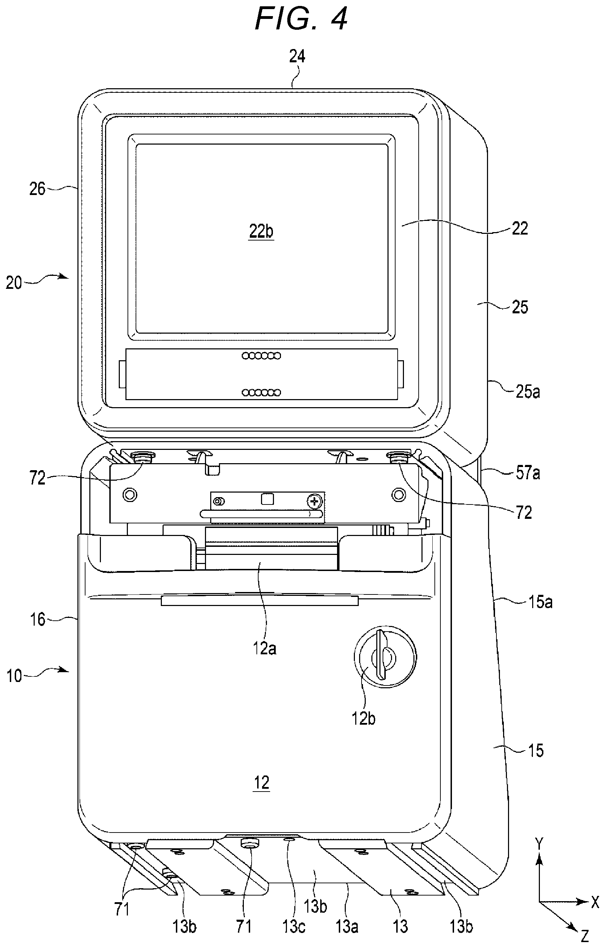

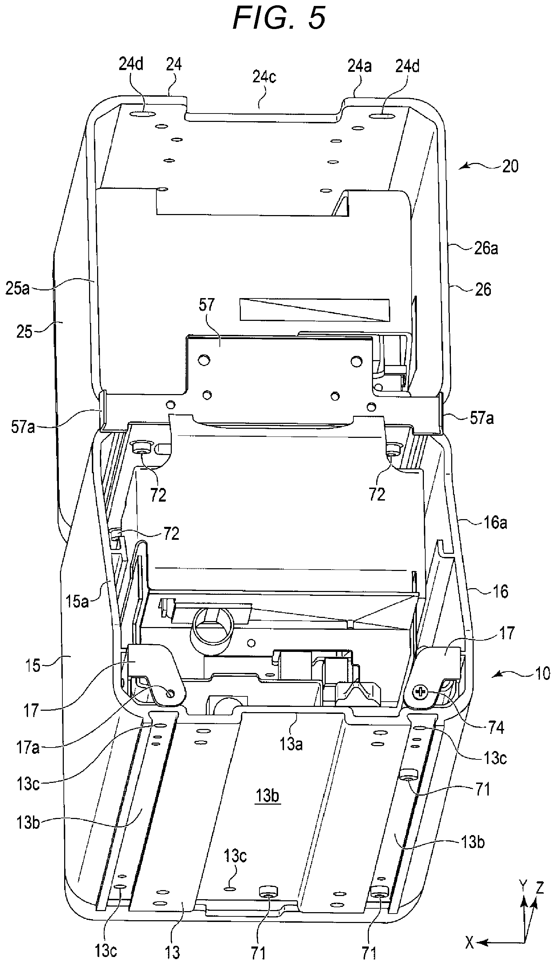

The components housed in the housing 11 of the printer 10 partially project to the back side via the opening section on the back side of the housing 11. Specifically, a part of the components projects further to the back side than the rear end side 14a of the top wall 14 and the rear end sides 15a and 16a of the sidewalls 15 and 16. The components are fastened and fixed to the bottom wall 13 of the housing 11 by, for example, a plurality of screws 71 (FIGS. 4 and 5).

The components projecting from the opening section on the back side of the housing 11 are covered by the back cover 50. In other words, the back cover 50 has a shape swelling to the back side of the printer 10 and houses the components projecting from the opening section on the back side of the housing 11 of the printer 10.

The printer 10 is larger and heavier compared with the other units because the printer 10 houses roll paper (not illustrated in FIG. 3) functioning as a base material of a receipt. In the self-POS 100 in this embodiment, the scanner 20 is disposed on the printer 10 and the display 40 is disposed on the scanner 20. For that reason, the printer 10 is disposed at the bottom to improve setting stability of the self-POS 100.

The top wall 14 of the housing 11 includes a plurality of insert-through holes 14b for inserting through a plurality of screws 72 (FIGS. 4 and 5) for fixing the scanner 20. The plurality of screws 72 function as fixing members for detachably fixing the housing 11 of the printer 10 and the housing 21 of the scanner 20. As illustrated in FIGS. 4 and 5, the plurality of screws 72 are inserted through the insert-through holes 14b of the top wall 14 from the inner side of the housing 11 of the printer 10. The top wall 14 of the housing 11 of the printer 10 and a bottom wall 23 of the housing 21 of the scanner 20 are fastened and fixed by the plurality of screws 72. The top wall 14 includes, on the rear end side 14a of the top wall 14, a cutout 14c for allowing a plurality of wires to pass.

The bottom wall 13 of the housing 11 includes, as illustrated in FIGS. 4 and 5, a plurality of (in this embodiment, three) grooves 13b extending in the front-rear direction (Z axis direction). The grooves 13b are formed by bending a plate material of the bottom wall 13 in a plurality of parts. Insert-through holes 13c, through which the screws 71 for fixing the components of the printer 10 to the bottom wall 13 are inserted, are provided in the grooves 13b. The bottom wall 13 is in surface contact with a non-illustrated workbench. As a result, the heads of the screws 71 are disposed in the grooves 13b not to project further downward than the bottom wall 13. The rigidity of the bottom wall 13 serving as a frame is improved by providing the plurality of grooves 13b.

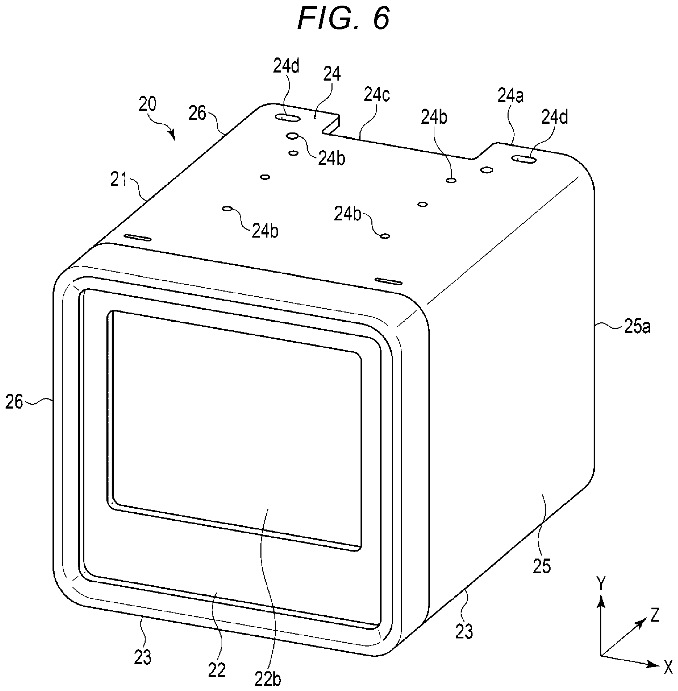

As illustrated in FIG. 6, the scanner 20 includes the housing 21 having a substantially rectangular box shape. The housing 21 includes a front wall 22, a bottom wall 23, a top wall 24, and left and right sidewalls 25 and 26. The housing 21 does not have a wall and is open on the back side. The housing 21 forms an outer shell of the scanner 20. The bottom wall 23 of the housing 21 functions as a frame for supporting and fixing components in the housing 21.

A window section 22b, over which a barcode of a non-illustrated commodity is held, is provided in the front wall 22 of the housing 21. As the scanner 20, there is a type of irradiating a laser beam on a barcode of a commodity and scanning the barcode and a type of imaging a barcode using a CCD and reading the barcode with image recognition. The components of the scanner 20 housed in the housing 21 are fastened and fixed to the bottom wall 23 of the housing 21 by a non-illustrated plurality of screws.

On the bottom wall 23, a plurality of grooves (not illustrated in FIG. 6) same as the grooves 13b provided on the bottom wall 13 of the housing 11 of the printer 10 are provided. For that reason, in a state in which the scanner 20 is disposed on the printer 10, the heads of the screws for fixing the components do not interfere with the housing 11 of the printer 10. The rigidity of the bottom wall 23 is improved by the plurality of grooves.

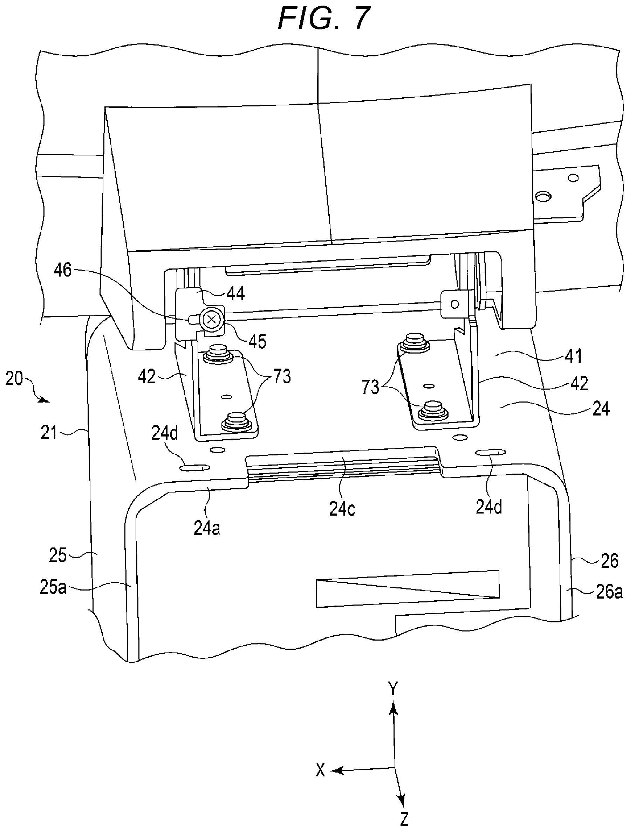

In the top wall 24 of the housing 21, a plurality of insert-through holes 24b (FIG. 6) for inserting through a plurality of screws 73 (FIG. 7) for fastening and fixing the supporting leg 41 of the display 40 are provided. As illustrated in FIG. 7, the plurality of screws 73 are inserted through non-illustrated insert-through holes provided in a supporting frame 42 of the supporting leg 41 and the insert-through holes 24b of the top wall 24 of the scanner 20 from above the scanner 20. The supporting frame 42 is fastened and fixed to the housing 21 of the scanner 20.

The supporting leg 41 of the display 40 includes a hinge mechanism for enabling a display body to turn with respect to the supporting frame 42 fixed to the top wall 24 of the scanner 20. A fixing piece 44 for fixing a turning position of the display body is provided in the hinge mechanism. The fixing piece 44 includes a slit 46 through which a screw 45 is inserted. The fixing piece 44 is disposed in a position for restricting rotation of the display 40 and fixed to the supporting frame 42 by the screw 45.

A cutout 24c for allowing a plurality of wires to pass is provided on a rear end side 24a of the top wall 24. The supporting frame 42 of the display 40 is covered by the leg cover 43 (FIG. 2). That is, after the display 40 is fixed to the scanner 20 by the screws 73 and the rotation of the display 40 is restricted by the fixing piece 44, the leg cover 43 is attached.

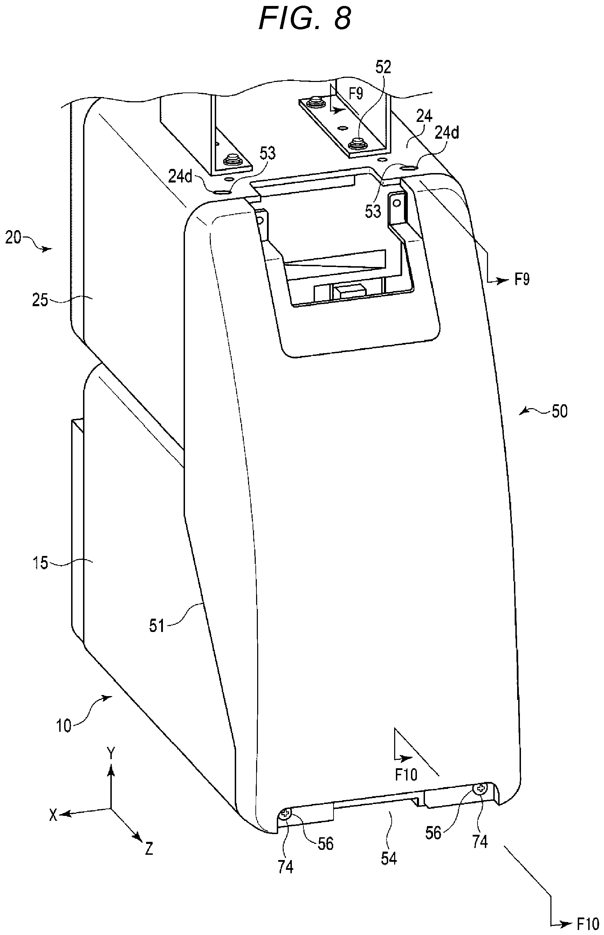

As illustrated in FIG. 8, the back cover 50 is provided on the back side of an assembly obtained by attaching the scanner 20 on the printer 10 as explained above. That is, the back cover 50 is provided to collectively cover the opening section on the back side of the printer 10 and the opening section on the back side of the scanner 20 illustrated in FIG. 5. In other words, the back cover of the printer 10 and the back cover of the scanner 20 are not separated. The back sides of the two units are covered by one back cover 50.

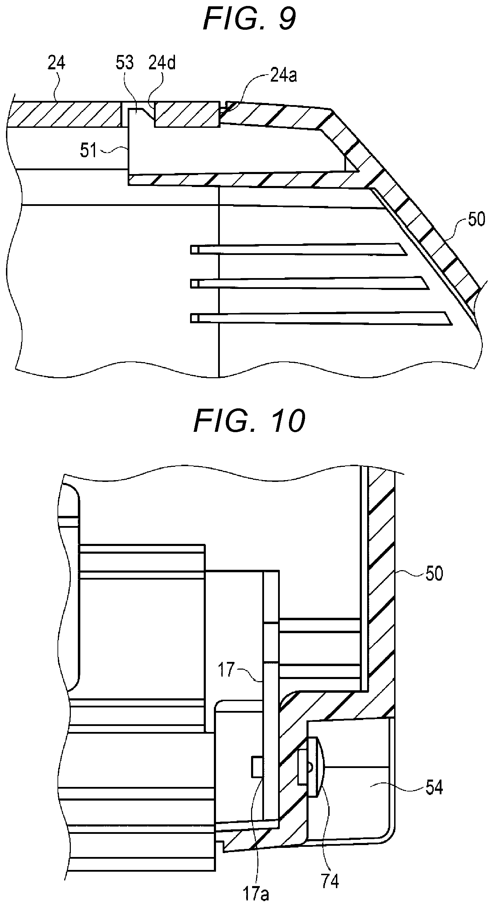

The back cover 50 includes a frame-like engaging end 51 having a shape adjusted to the shapes of the four rear end sides 13a, 14a, 15a, and 16a on the back side of the housing 11 of the printer 10 and four rear end sides 23a, 24a, 25a, and 26a on the back side of the scanner 20. As explained above, the back cover 50 has the shape swelling to the back side and covers the components of the printer 10. A cutout section 52 for attaching a wire cover 55 (FIG. 2) is provided near the upper end of the back cover 50. As illustrated in FIG. 9, the upper end of the back cover 50 is fixed to the top wall 24 of the scanner 20. Two engaging protrusions 53 projecting upward are provided at the engaging end 51 near the upper end of the back cover 50. The two engaging protrusions 53 are provided in positions separated to the left and the right along the engaging end 51. On the other hand, two engaging holes 24d for respectively receiving the two engaging protrusions 53 are provided in the vicinity of the rear end side 24a of the top wall 24 of the housing 21 of the scanner 20. The engaging protrusions 53 are engaged in the engaging holes 24d from the inner side of the top wall 24.

As illustrated in FIG. 10, the lower end of the back cover 50 is fixed to the housing 11 of the printer 10. A recess 54 extending to the left and the right is provided near the lower end of the back cover 50. Two insert-through holes 56 (see FIG. 8) for inserting through screws 74 for fixing are provided at the bottom of the recess 54. On the other hand, two fixing plates 17 having screw holes 17a for screwing the screws 74 are attached near the lower end on the back side of the housing 11 of the printer 10. Two fixing plates 17 are provided in positions separated to each other in vicinity to the left and right side walls 15, 16.

When the back cover 50 is attached, first, the two engaging protrusions 53 at the upper end of the back cover 50 are engaged in the engaging holes 24d provided in the housing 21 of the scanner 20. The screws 74 are inserted through from the outer side of the back cover 50 via the insert-through holes 56 and screwed in the screw holes 17a on the housing 11 side. Consequently, the back cover 50 is attached to the back sides of the printer 10 and the scanner 20.

As illustrated in FIG. 5, a pressing plate 57 that presses wires is attached between the two housings 11 and 21 on the back sides of the housing 11 of the printer 10 and the housing 21 of the scanner 20. When the self-POS is viewed from the front side as illustrated in FIG. 1, left and right both ends 57a of the pressing plate 57 serve as blocking members that fill gaps between the printer 10 and the scanner 20 and the back cover 50.

As explained above, according to the first embodiment, the printer 10, the scanner 20, the card reader 30, and the display 40 can be combined. A device layout corresponding to needs of users can be provided.

According to the first embodiment, the housing 11 of the printer 10 forms the outer shell of the printer 10 and serves as the frame for supporting and fixing the components housed on the inside. Therefore, it is unnecessary to provide a frame in the housing 11. The number of components can be reduced. Accordingly, the manufacturing cost of the apparatus can be reduced.

If the components in the housing 11 need to be replaced or repaired because of a failure or the like of the printer 10, it is possible to access the components from the back side of the housing 11 simply by detaching the back cover 50 without detaching the frame (i.e., the housing 11). As a result, maintenance work can be simplified.

According to the first embodiment, the housing 21 of the scanner 20 forms the outer shell of the scanner 20 and serves as the frame for supporting and fixing the components housed on the inside. Therefore, it is unnecessary to provide a frame in the housing 21. The number of components can be reduced. Accordingly, the manufacturing cost of the apparatus can be reduced.

If the components in the housing 21 need to be replaced or repaired because of a failure or the like of the scanner 20, it is possible to access the components from the back side of the housing 21 simply by detaching the back cover 50 without detaching the frame (i.e., the housing 21). As a result, maintenance work can be simplified.

Further, according to the first embodiment, the plurality of grooves 13b are provided on the bottom wall 13 of the housing 11 of the printer 10. As a result, the rigidity of the housing 11 can be improved. The heads of the screws 71 for fixing the components can be housed in the housing 11. The bottom wall 23 of the scanner 20 has the same configuration and can achieve the same advantage.

### Second Embodiment

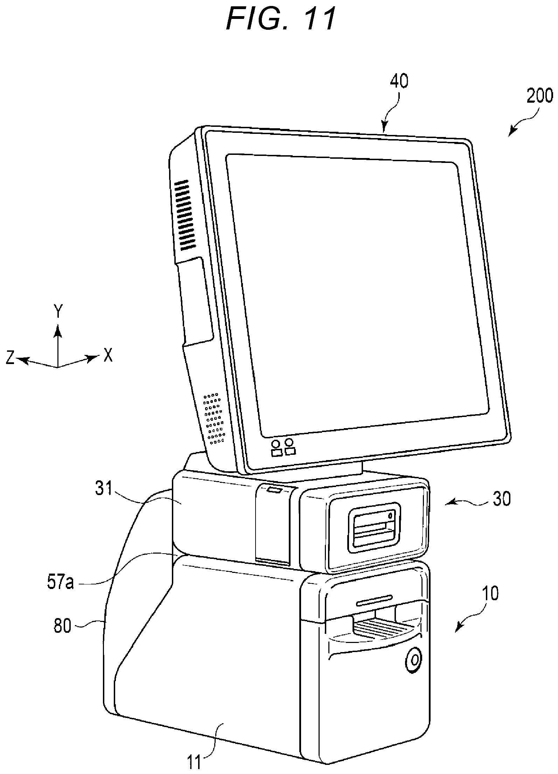

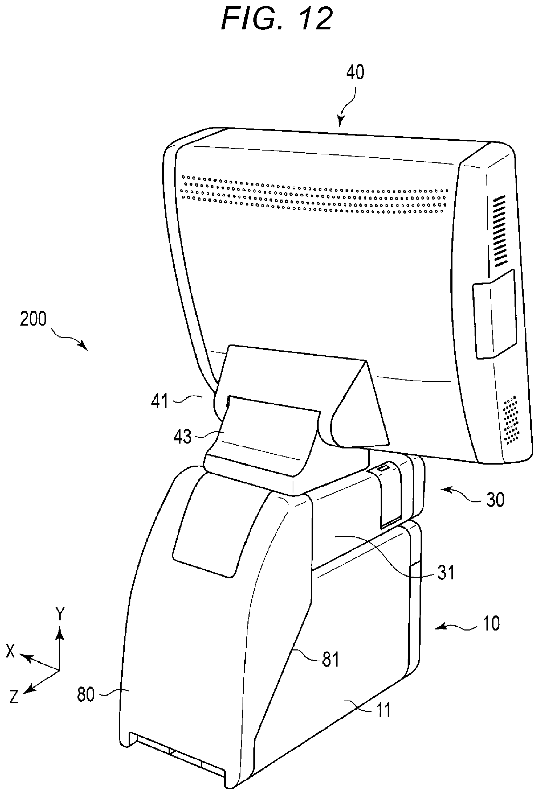

As illustrated in FIGS. 11 and 12, a self-POS 200 (a commodity-data processing apparatus) according to a second embodiment has structure in which, instead of the scanner 20, the card reader 30 is disposed on the printer 10. The scanner 20 may be disposed beside the printer 10 or may be omitted as illustrated in FIGS. 11 and 12. The self-POS 200 according to the second embodiment has the same configuration as the self-POS according to the first embodiment except for a back cover 80 that covers the back side of an assembly of the printer 10 and the card reader 30, and the printer 10 is also the same as that of the first embodiment. Therefore, components functioning the same as the components in the first embodiment are denoted by the same reference numerals and signs. Detailed explanation of the components is omitted.

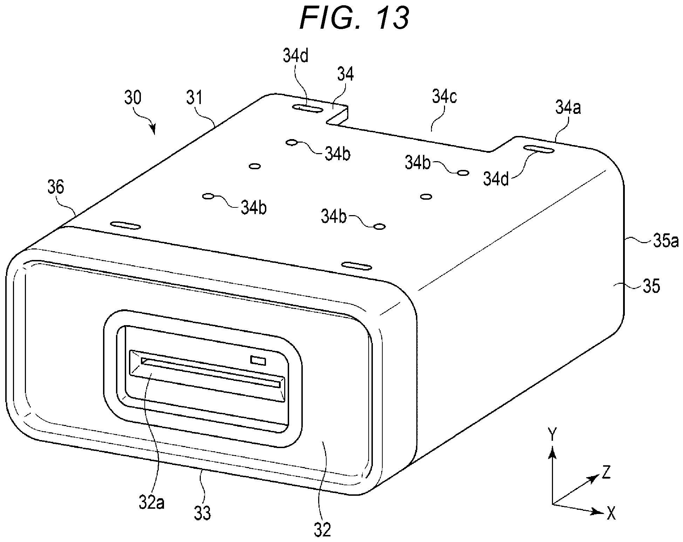

As illustrated in FIG. 13, the card reader 30 includes the housing 31 having a substantially rectangular box shape. The housing 31 includes a front wall 32, a bottom wall 33, a top wall 34, and left and right sidewalls 35 and 36. The housing 31 does not have a wall and is open on the back side. The housing 31 forms an outer shell of the card reader 30. The bottom wall 33 of the housing 31 serves as a frame for supporting and fixing components housed in the housing 31. The housing 31 has a smaller thickness along the up-down direction than the thickness of the housing 21 of the scanner 20.

A card insertion port 32a for inserting a credit card or a point card presented from a person who purchases commodities is provided in the front wall 32 of the housing 31. The components of the card reader 30 housed in the housing 31 are fastened and fixed to the bottom wall 33 of the housing 31 by a non-illustrated plurality of screws.

On the bottom wall 33, a plurality of grooves (not illustrated in FIG. 13) same as the grooves 13b provided on the bottom wall 13 of the housing 11 of the printer 10 are provided. For that reason, in a state in which the card reader 30 is disposed on the printer 10, the heads of the screws for fixing the components do not interfere with the housing 11 of the printer 10. The rigidity of the bottom wall 33 is improved by the plurality of grooves.

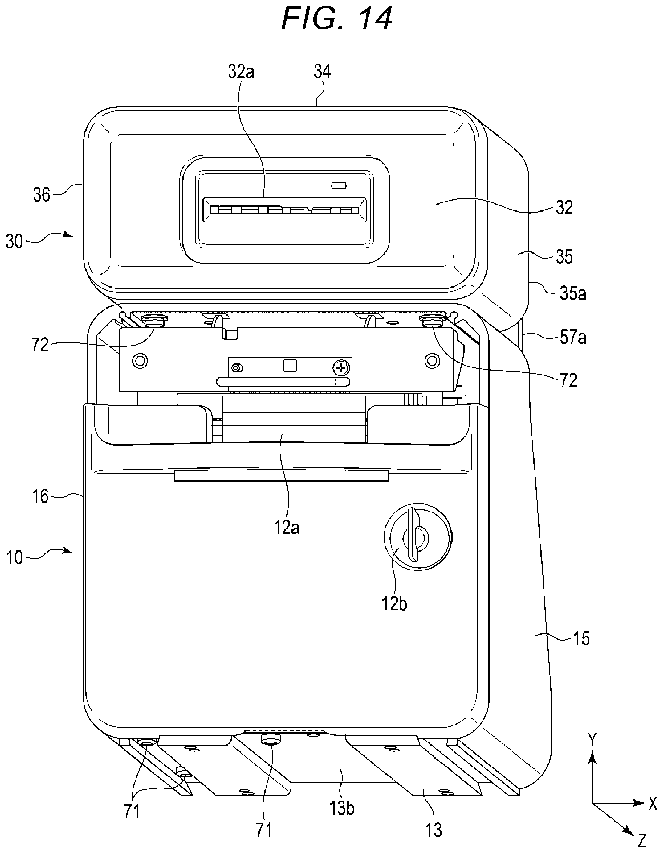

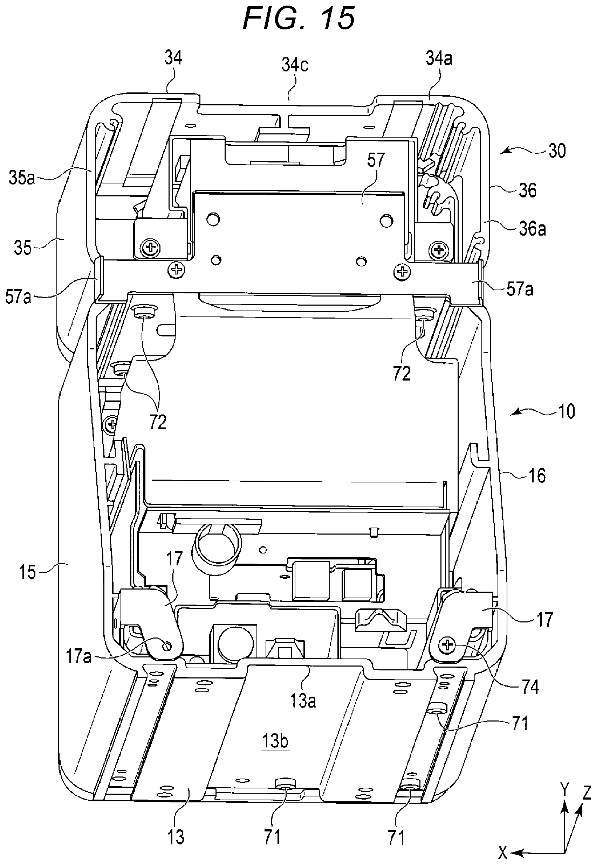

As illustrated in FIGS. 14 and 15, the bottom wall 33 of the housing 31 of the card reader 30 and the top wall 14 of the housing 11 of the printer 10 are fastened and fixed using the plurality of screws 72 as in the first embodiment explained above. The plurality of screws 72 function as fixing members that detachably fix the housing 11 of the printer 10 and the housing 31 of the card reader 30.

In the top wall 34 of the housing 31, a plurality of insert-through holes 34b for inserting through a plurality of screws (not illustrated in FIGS. 14 and 15) for fastening and fixing the supporting frame 42 of the display 40 are provided. As illustrated in FIG. 7, the plurality of screws 73 are inserted through the non-illustrated insert-through holes provided in the supporting frame 42 of the supporting leg 41 and the insert-through holes 34b of the top wall 34 of the card reader 30. The supporting frame 42 is fastened and fixed to the housing 31 of the card reader 30.

The back cover 80 is provided on the back side of an assembly obtained by attaching the card reader 30 on the printer 10. Since the card reader 30 is thinner than the scanner 20, the back cover 80 is shorter than the back cover 50 in the first embodiment. As illustrated in FIG. 12, the back cover 80 is provided to collectively cover the opening section on the back side of the printer 10 and the opening section on the back side of the card reader 30. In other words, the back cover of the printer 10 and the back cover of the card reader 30 are not separated. The back sides of the two units are covered by one back cover 80.

The back cover 80 includes a frame-like engaging end 81 having a shape adjusted to the shapes of the four rear end sides 13a, 14a, 15a, and 16a on the back side of the housing 11 of the printer 10 and four rear end sides 33a, 34a, 35a, and 36a on the back side of the card reader 30. The back cover 80 has the shape swelling to the back side and covers the components of the printer 10.

A fixing structure of the back cover 80 is the same as the fixing structure in the first embodiment explained above. That is, two engaging holes 34d for receiving engaging protrusions (not illustrated in FIG. 12) provided at the upper end of the engaging end 81 of the back cover 80 are provided near the rear end side 34a of the top wall 34 of the card reader 30. As in the first embodiment explained above, two insert-through holes (not illustrated in FIG. 12) for inserting through the screws 74 screwed in the screw holes 17a of the fixing plates 17 of the printer 10 are provided near the lower end of the back cover 80.

As explained above, according to the second embodiment, the printer 10, the card reader 30, and the display 40 can be combined. A device layout corresponding to needs of users can be provided.

According to the second embodiment, the housing 31 of the card reader 30 forms the outer shell of the card reader 30 and serves as the frame for supporting and fixing the components housed on the inside. For that reason, it is unnecessary to provide a frame in the housing 31. The number of components can be reduced. Accordingly, the manufacturing cost of the apparatus can be reduced.

Further, according to the second embodiment, since the plurality of grooves are provided on the bottom wall 33 of the housing 31 of the card reader 30, the rigidity of the housing 31 can be improved. The heads of the screws for fixing the components can be housed in the housing 31.

### Modification

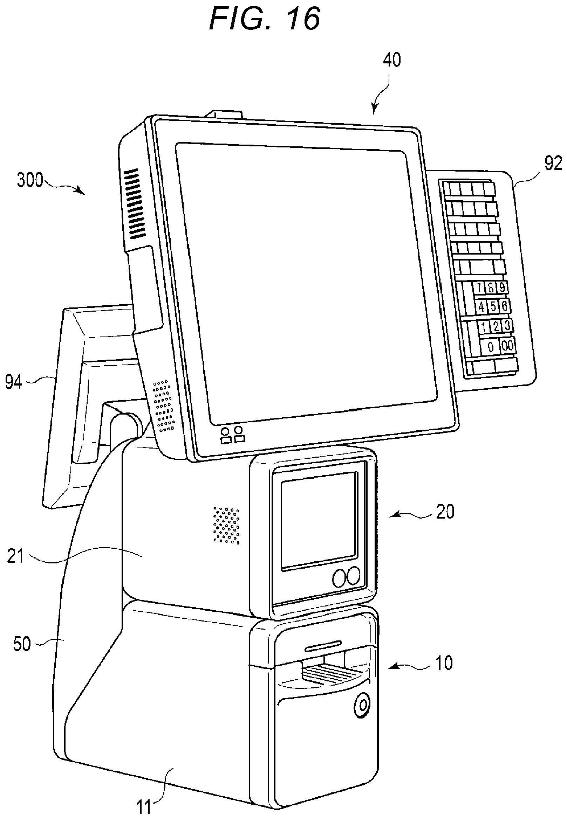

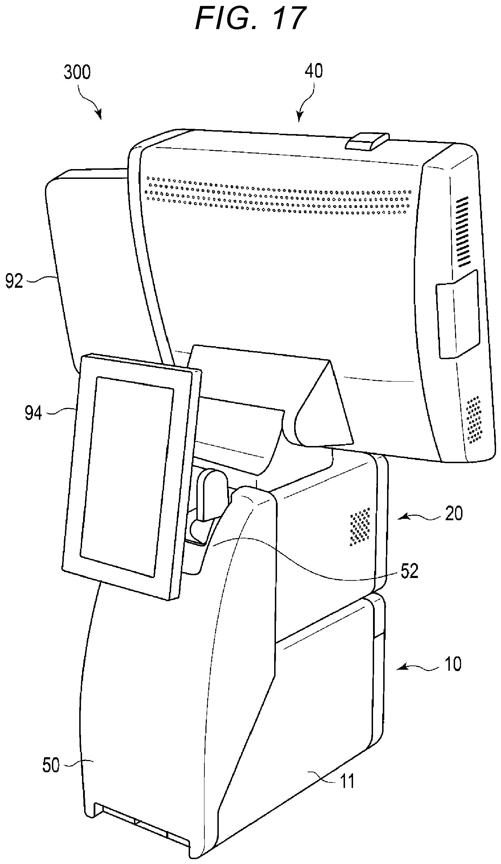

As illustrated in FIGS. 16 and 17, a self-POS 300 according to a modification includes, besides the printer 10, the scanner 20, and the display 40, a numeric keypad 92 operated by a store clerk and a sub-display 94 operated by a person who purchases commodities. The numeric keypad 92 is directed to the front side and attached to the right side of the display 40. The sub-display 94 is directed to the back side and attached to the housing 21 of the scanner 20 via the cutout section 52 of the back cover 50. The sub-display 94 includes a hinge mechanism, an angle of which can be changed.

As in this modification, the numeric keypad 92 and the sub-display 94 can be attached to the self-POSs 100 and 200 in the embodiments explained above. The scanner 20 can be disposed on the printer 10, the card reader 30 can be disposed on the scanner 20, and the display 40 can be disposed on the card reader 30. That is, a combination of the printer 10, the scanner 20, and the card reader 30 can be freely changed. The superimposing order of the printer 10, the scanner 20, and the card reader 30 can be optionally changed.

With the self-POS (the commodity-data processing apparatus) in at least one of the embodiments explained above, the independent plurality of units such as the printer 10, the scanner 20, and the card reader 30 can be freely combined. A device layout corresponding to needs of users can be provided.

The several embodiments are explained above. However, these embodiments are presented as examples and are not intended to limit the scope of the invention. These embodiments can be implemented in other various forms. Various omissions, substitutions, and changes can be performed without departing from the scope of the invention. These embodiments and modifications of the embodiments are included in the scope and the gist of the invention and included in the inventions described in claims and the scope of equivalents of the inventions.

For example, in the embodiments explained above, the scanner 20 and the card reader 30 are disposed on the printer 10. Alternatively, the card reader 30 may be disposed on the scanner 20 and the printer 10 may be disposed beside an assembly of the card reader 30 and the scanner 20.

## Claims

1. A commodity-data processing apparatus comprising:
a receipt printer including a printer housing having a first rear opening;
a scanner including a scanner housing having a second rear opening, the scanner housing being disposed adjacent to the printer housing and detachably fixed to the printer housing; and
a cover covering the first rear opening of the receipt printer and the second rear opening of the scanner.

2. The commodity-data processing apparatus according to claim 1, wherein the printer housing includes a receipt discharge opening on a front side opposite to a rear side on which the first rear opening is formed, and the scanner includes a scanning window on a front side opposite to a rear side on which the second rear opening is formed.

3. The commodity-data processing apparatus according to claim 1 or 2, wherein a top surface of the printer housing faces a bottom surface of the scanner.

4. The commodity-data processing apparatus according to any one of claims 1 to 3, wherein a width of the first rear opening of the printer housing between side surfaces of the printer housing is equal to a width of the second rear opening of the scanner housing between side surfaces of the scanner housing.

5. The commodity-data processing apparatus according to any one of claims 1 to 4, wherein side surfaces of the printer housing are flush with side surfaces of the scanner housing on both sides.

6. The commodity-data processing apparatus according to any one of claims 1 to 5, wherein a front surface of the printer housing is flush with a front surface of the scanner housing.

7. The commodity-data processing apparatus according to any one of claims 1 to 6, further comprising a card reader including a card reader housing that is not covered by the cover.

8. A commodity-data processing apparatus comprising:
a receipt printer including a printer housing having a first rear opening;
a card reader including a card reader housing having a second rear opening, the card reader housing being disposed adjacent to the printer housing and detachably fixed to the printer housing; and
a cover covering the first rear opening of the receipt printer and the second rear opening of the card reader.

9. The commodity-data processing apparatus according to claim 8, further comprising a scanner including a scanner housing provided separately from the printer housing and the card reader housing.

10. A commodity-data processing apparatus comprising:
a receipt printer including a printer housing having a first rear opening;
a scanner including a scanner housing having a second rear opening;
a card reader including a card reader housing having a third rear opening, at least two of the printer housing, the scanner housing, and the card reader housing being detachably fixed to each other;
a display;
a controller configured to control the receipt printer, the scanner, the card reader, and the display; and
a cover covering at least two of the first, second, and third rear openings corresponding to said at least two of the printer housing, the scanner housing, and the card reader housing.

11. The commodity-data processing apparatus according to claim 10, wherein
the printer housing includes a receipt discharge opening on a front side opposite to a rear side on which the first rear opening is formed,
the scanner includes a scanning window on a front side opposite to a rear side on which the second rear opening is formed, and
the card reader includes a card insertion opening on a front side opposite to a rear side on which the third rear opening is formed.

12. The commodity-data processing apparatus according to claim 10 or 11, wherein a width of the first rear opening of the printer housing between side surfaces of the printer housing, a width of the second rear opening of the scanner housing between side surfaces of the scanner housing, and a width of the third rear opening of the card reader housing between side surfaces of the card reader housing are equal to each other.

13. The commodity-data processing apparatus according to any one of claims 10 to 12, wherein a front surface of the printer housing, a front surface of the scanner housing, and a front surface of the card reader housing are flush with each other.

14. The commodity-data processing apparatus according to any one of claims 10 to 13, wherein the display is disposed on a top surface of one of said at least two of the printer housing, the scanner housing, and the card reader housing that is disposed uppermost.

15. The commodity-data processing apparatus according to any one of claims 10 to 14, further comprising a second display attached to the cover and facing opposite to the display.
